# EUROPEAN PATENT SPECIFICATION

(11) **EP 2 981 427 B1**
(45) Date of publication and mention of the grant of the patent: **26.06.2019**
(21) Application number: 14716777.9
(22) Date of filing: 03.04.2014
(51) Int. Cl.: B60K 15/03, B60K 15/04, B29C 65/00, B29L 31/00, B29C 49/04, B29C 49/20, B29C 49/42, B29C 49/48, B29K 105/00, B29L 31/30

(54) **A COMPONENT FOR A VEHICLE PLASTIC ARTICLE SUCH AS A FUEL TANK**
KOMPONENTE FÜR EIN FAHRZEUGKUNSTSTOFFTEIL WIE EINEN KRAFTSTOFFTANK
COMPOSANT D'UN ARTICLE EN PLASTIQUE DE VÉHICULE TEL QU'UN RÉSERVOIR DE CARBURANT

(30) Priority: 05.04.2013 US 201361808801 P; 09.07.2013 EP 13175687
(43) Date of publication of application: 10.02.2016
(73) Proprietor: Plastic Omnium Advanced Innovation and Research, 1120 Bruxelles (BE)
(72) Inventor: HILL, David, Commerce Township, MI 48382 (US); BOURNONVILLE, Philippe, B-5150 Floriffoux (BE); CRIEL, Bjorn, B-1750 Sint-martens-lennik (BE)
(74) Representative: Potdevin, Emmanuel Eric
(86) International application number: PCT/EP2014/056744
(87) International publication number: WO 2014/161964

(56) References cited:
- FR-A1- 2 853 861
- KR-A- 20050 122 223
- US-A1- 2006 088 375

## Description

The invention relates to vehicle plastic articles such as fuel tanks.

Fuel tanks on board vehicles of various kinds generally have to meet imperviousness and permeability standards in relation to the type of use for which they are designed and the environmental requirements that they have to satisfy. Both in Europe and throughout the world the manufacturers are currently experiencing a considerable tightening of the requirements concerned with limiting the emissions of pollutants into the atmosphere and into the environment in general. The design of fuel tanks is therefore evolving quickly towards techniques capable of better guaranteeing the imperviousness and safety under varying conditions of use. Furthermore, attempts are also being made to minimize the losses originating from the pipes and various accessories connected to the tanks. For example, the attaching of pipes and, in particular, of the filler pipe, spouts and flanges to the tank may present problems of permeability. With a view to reducing these problems, various solutions are proposed, most of which call upon an intermediate part or neck. However, problems of imperviousness may still arise at this neck.

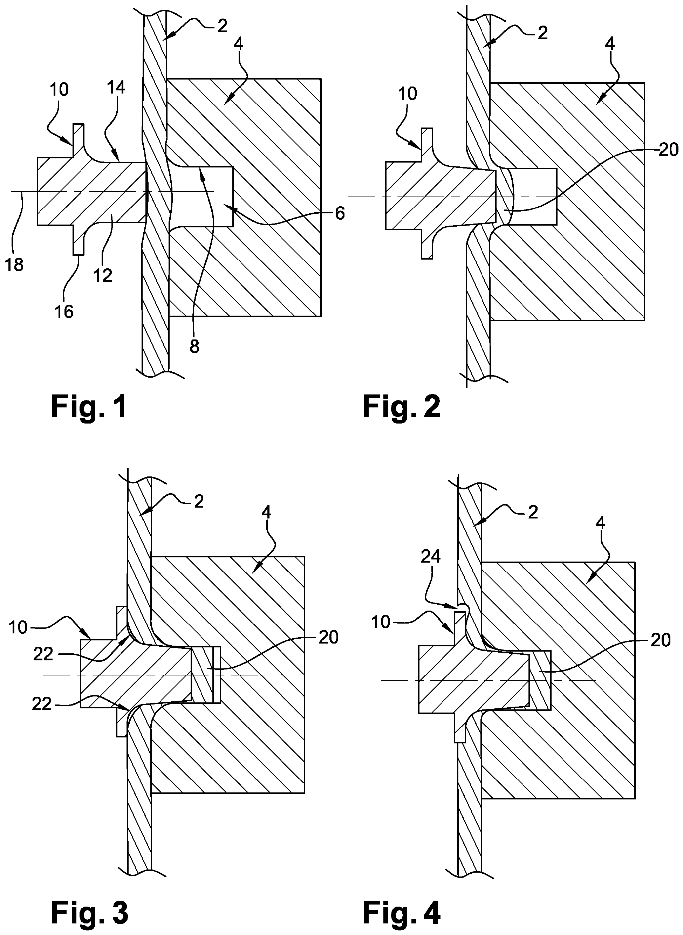

To this end, one methodology uses a component inserted from the inside of the tank to stretch the exterior material in order to create a functional connection point in which the inside and outside of the tank can communicate and the exterior of this functional connection is made of the tank surface. Figures 1 to 5 show steps of this method and depict the sequence of component insertion and welding.

In figure 1, a plastic tank parison 2 has been extruded and is going to be blow molded in a mold 4. It is in contact with the mold via positive pressure inside the mold cavities and/or a central core. The mold has a cavity 6 for forming a neck. This cavity has a face 8 of generally cylindrical or frusto-conical shape. Mold 4 is not entirely represented in the figures (i.e. what is represented is a part of the mold used for moulding the fuel tank).

The method also uses a component 10 comprising a main hollow body 12 showing an external face 14 having a cylindrical or frusto-conical shape. The component has a shoulder 16 which protrudes from face 14 in a radial direction with reference to a main axis 18 of the component. The component is arranged to enter cavity 6 so as to form a male-female assembly. This component is going to be welded to the tank wall at the neck. Accordingly, it serves both for molding the connection point and for reinforcing it. During the making of the neck, parison wall 2 is interposed between cavity 6 and component 10, as illustrated on figure 1.

On figure 2, component 10 begins to advance toward the parison in order to form the protrusion or neck 20 by shaping the parison into mold cavity 6.

Figure 3 shows additional advancement of the component into the parison, forcing it into the mold cavity. But some air 22 is trapped at that stage between the parison and the face of the shoulder facing the parison. This air is located at a junction of the shoulder with the main body.

Figure 4 shows the end of the movement of the component into the cavity with the final form of neck 20. It also shows a void 24 created in the parison 2 as a result of an attempted escape of the trapped air.

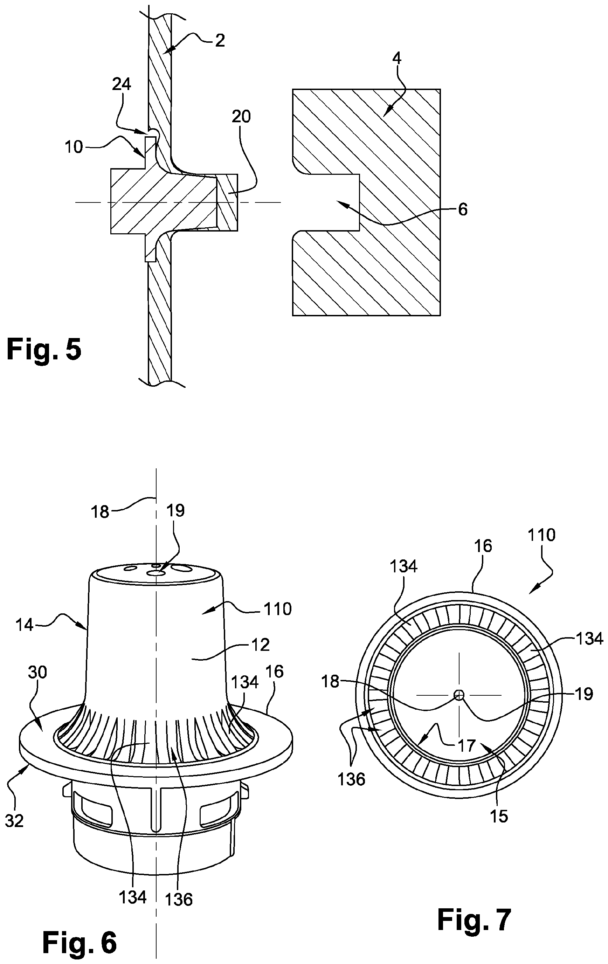

As illustrated on figure 5, tank 2 carrying component 10 is finally extracted from the mold. The free end of the neck will be cut to give access to the spud from outside the tank.

Void 24 results in a bad weld between the component and the tank wall and forms a possible leak path for fuel. This problem of entrapment of air arises especially because the welding of the component is performed on a 3-dimensional surface. But regulations force the minimization of permeation of evaporative emissions from the fuel system. As a result this current process of welding is not sufficient to meet these requirements.

A component according to the preamble of claim 1 is known from US 2006/088375 A1 and from KR 2005 0122223 A, and a process according to the preamble of claim 15 is known from KR 2005 0122223 A.

It is an object of the invention to solve the problem described above.

To this end, the invention relates to a component for a vehicle plastic hollow article according to claim 1.

Preferably, this component is designed to be inserted during the blow molding process into the inside of a molten plastic parison, from which a wall of a fuel tank can be obtained, and has means of containing or relieving air trapped between the surface of the wall of the fuel tank and the surface of the component, at the junction of the main body with the shoulder. In other words, the component has means for evacuating air from the weld surface of the component during the molding process. For example, the component forms a protrusion in the side of the tank to form an inlet into the tank for fluid transfer. Indeed, the invention may be used for molding a filler neck or spud into the tank, for filling the tank with fuel.

Advantageously, the recess or at least one of the recesses has a closed bottom.

Accordingly, the component has at least one pocket in which the air is trapped when the shoulder contacts the wall. Thus the air does not escape and the welding is preserved.

In one embodiment, the ribs are oriented along a radial direction with reference to a main axis of symmetry of the component.

In another embodiment, the ribs are parallel to a same plane and parallel to a main axis of symmetry of the component.

This permits to make the component itself by a molding process in which the line of draw can be situated in a plane that is radial to the main axis of the component and perpendicular to the ribs.
Advantageously, the recess or at least one of the recesses has two distinct openings.

Accordingly, air can escape through the recess and away from the component.

In some embodiments, the recess or at least one of the recesses extends in the shoulder, preferably in the shoulder only.

In some embodiments, the recess or at least one of the recesses extends in a wall of the body.

In some cases, the recess or at least one of the recesses is in communication with a main internal cavity of the body.

Thus air can escape through this cavity.
In some cases, the recess or at least one of the recesses is arranged for not being in communication with a main internal cavity of the body.

In some embodiments, the recess or at least one of the recesses comprises a bore.

For example, the bore or at least one of the bores is parallel to a main axis of symmetry of the component.
For example also, the bore or at least one of the bores is oriented along a radial direction with reference to a main axis of symmetry of the component.

The invention also provides a vehicle plastic fuel tank, comprising a component according to the invention.

The above-mentioned article and the fuel tank according to the invention are made of plastic. The term "plastic" denotes any material comprising at least one synthetic resin polymer. All types of plastics may be suitable. Particularly suitable plastics come from the thermoplastics category.

The term "thermoplastic" denotes any thermoplastic polymer, including thermoplastic elastomers, as well as blends thereof. The term "polymer" denotes both homopolymers and copolymers (especially binary or ternary copolymers). Examples of such copolymers are, non-limitingly, random copolymers, linear block copolymers, other block copolymers and graft copolymers. Any type of thermoplastic polymer or copolymer whose melting point is below the decomposition temperature is suitable.

Synthetic thermoplastics that have a melting range spread over at least 10 degrees Celsius are particularly suitable. Examples of such materials include those that exhibit polydispersion in their molecular weight.

In particular, polyolefins, thermoplastic polyesters, polyketones, polyamides and copolymers thereof may be used. A blend of polymers or copolymers may also be used, as may a blend of polymer materials with inorganic, organic and/or natural fillers such as, for example, but non-limitingly, carbon, salts and other inorganic derivatives, natural fibers or polymeric fibers. It is also possible to use multilayer structures consisting of stacked layers bonded together comprising at least one of the polymers or copolymers described above.

One polymer that is often used is polyethylene. Excellent results have been obtained with high density polyethylene (HDPE).

The wall of the article or of the tank may be made up of a single layer of thermoplastic or of two layers. One or more other possible additional layers may, advantageously, consist of layers of a material that forms a barrier to the liquids and/or gases. As a preference, the nature and thickness of the barrier layer are chosen in such a way as to limit as far as possible the permeability towards the liquids and gases in contact with the interior surface of the article or tank. As a preference, this layer is based on a barrier resin that is to say on a resin impermeable to the fuel such as EVOH for example (a copolymer of ethylene and partially hydrolysed vinyl acetate). Alternatively, the article or tank may be subjected to a surface treatment (fluoration or sulphonation) the purpose of which is to render it impermeable to the fuel.

Preferably, the article or tank is produced by molding a parison. A "parison" is intended to mean a preform, generally extruded, which is intended to constitute the wall of the article or tank once it has been molded to the required shape and size. This preform does not have to be made as a single piece. Such a preform can be for example tubular or in the form of one or more sheets.

Preferably, the invention is aimed at forming a pipe, a spout or a flange to the article or tank. As a preference, it is aimed at forming the tank filler pipe which is generally a part of relatively complex geometry. It may also be a spout for connecting venting lines or fuel lines for instance, or a flange bearing accessories. The neck formed by the component in the article or tank generally has a substantially cylindrical shape. It may bear a thread (for instance for fixation by screwing of a flange bearing a complementary thread).

The molding of the neck may be performed independently from the molding of the rest of the article or tank. It may take place before or after the latter molding operation. For practical reasons, it preferably takes place before the article or tank is molded, or, in any case, prior to the last step of this molding operation (which may be the assembling of two shells molded separately in the same mold for example). Indeed, certain methods have recourse to the insertion of a core prior to the molding of the article for other reasons (for incorporating accessories for example) and this step may then be put to good use for (at least partially) molding the neck.

The invention also provides a process for making a vehicle plastic hollow article, comprising a step of molding a part of the article with a component according to the invention.

This method may use a blow-molding process.

The invention also provides a process for making a vehicle plastic hollow article according to claim 15.

Various embodiments of the invention will now be presented with reference to the drawings on which:
- figures 6 and 7 are respective perspective and section views of a component according to a first embodiment of the invention; and

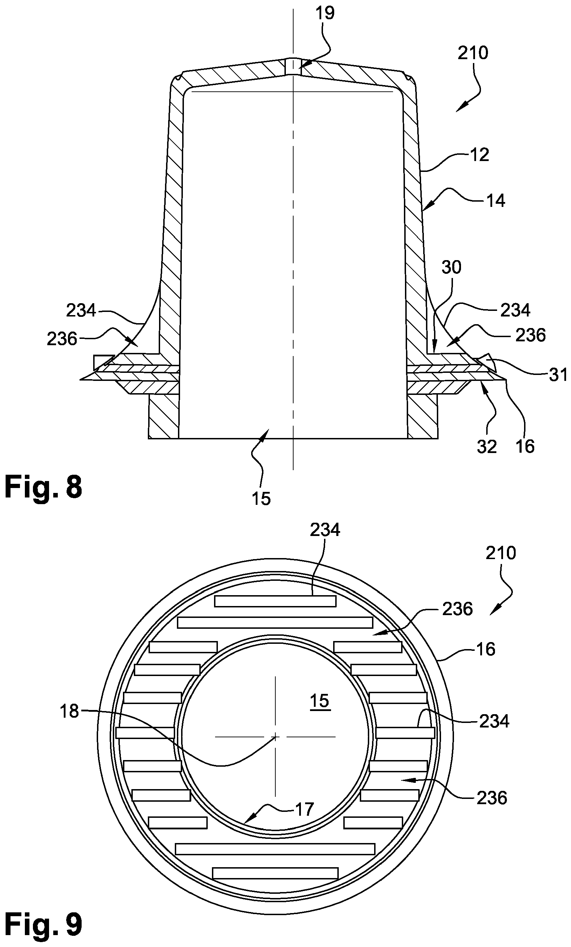

- figures 8 to 13 are similar views showing other embodiments of the invention.

In the following description, similar elements have same or similar reference numbers.

### First embodiment

A first embodiment of the component of the invention is illustrated on figures 6 and 7. In the same manner as component 10 of figures 1 to 5, component 110 of this first embodiment comprises a main hollow body 12 showing an external face 14 having a conical or frusto-conical shape. This body also has a cavity 15 and an internal face 17 having a conical or frusto-conical shape forming this cavity. The component has a shoulder formed in this case by a circumferential annular rim 16 which is coaxial with the body and protrudes from face 14 in a radial direction with reference to a main axis 18 of the component. It has front and rear faces 30, 32 which are planar and extend in respective planes that are perpendicular to axis 18. The component has a general shape having a symmetry of revolution with respect to this axis.

The component has ribs or blades 134 located at a junction of front face 30 with external face 14. In this embodiment, each rib 134 extends in a general plane which is radial to axis 18. Accordingly, the ribs are not parallel to each others. The ribs are all identical to each others. Each rib has the general form of a right triangle, with the right angle situated at the junction of faces 30 and 14. The hypotenuse is curved to be flush with body face 14. Here the component comprises a few dozens of ribs 134 but the number of ribs could be varied to be lower or higher.

The ribs form channels 136 between them. These channels are formed by the faces of the ribs facing each others.

In the same manner as explained above with reference to figures 1 to 5, component 110 is arranged to enter cavity 6 of a mold 4 so as to form a male-female assembly. This component is going to be welded to the tank wall at neck 20. Accordingly, it serves for molding the neck and for reinforcing it.

The method for making an article such as a fuel tank comprises the following steps:
- a parison 2 is introduced into mold 4;
- component 110 is introduced into the mold, inside the parison;
- the mold is closed;
- the parison is pressed firmly against the mold cavity by blowing through the component and/or drawing a vacuum behind the mold;
- neck 20 is molded in the parison by displacing the component within the counter-form of the mold ; and
- the tank is removed from the mold.

The channels form depressions or pockets arranged for receiving and trapping the air which is located at the junction of faces 14 and 30 when front face 30 of the rim contacts parison 2 when molding the neck. Thus, the air does not alter the welding of the component to the tank wall. This permits to avoid bad welds.

The front end of the component body has a through hole 19 which puts cavity 15 in communication with the outside of the component and permits to blow air against the parison to force it into the mold cavity.

With this orientation of the ribs, when making the component by molding, the line of draw (which is the direction in which mold parts will separate from the molded component, allowing it to be extracted without any obstructions) is situated in a plane which is perpendicular to axis 18. This permits to have an annular circumferential relief (not illustrated) protruding from face 30 if desired.

The component may be made of plastic.

### Second embodiment

A second embodiment of the component of the invention is illustrated on figures 8 and 9. This component 210 is identical to component 110 of the first embodiment except for the form and orientation of the ribs and channels.

Here, the ribs 234 are all parallel to each others and to axis 18. The ribs do not have the same shape and dimensions as their shape and dimensions vary depending on their position.

The ribs that face body 12 extend at the junction of faces 14 and 30. These ribs have a right triangle shape.

The other ribs extend from one edge of rim 16 to the other without contacting face 14. They have a rounded shape for example.

Ribs 234 again form channels 236 between them. These channels have the same function as in the first embodiment, which is to receive the air located between the rim and the parison, for example the air situated at the junction of faces 14 and 30, when molding the tank. Again, this permits to avoid bad welds.

With this orientation of the ribs, when making the component by molding, the line of draw can be situated in a plane which is radial to axis 18 and perpendicular to the ribs. This permits an easy demolding of the component but not to have an annular circumferential relief 31 protruding from face 30.

### Third embodiment

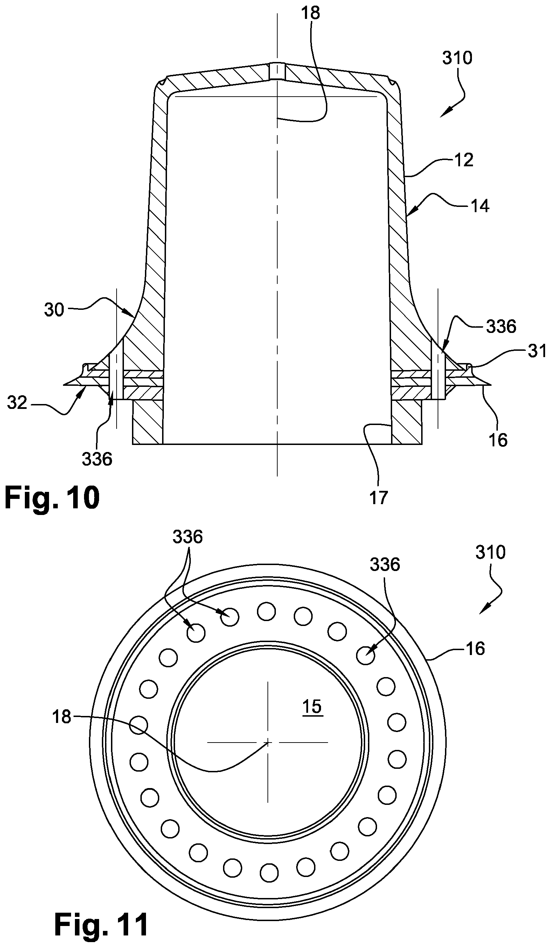

A third embodiment of the component 310 of the invention is illustrated on figures 10 and 11.

Front face 30 of the rim has a generally conical shape which is curved in the neighborhood of face 14 so as to be flush with it and give the component the general form of a bell.

This component does not possess ribs. It has bores 336 forming the recesses. Here the bores have a cylindrical shape with a circular perpendicular section but this form may vary. Bores 336 extend through the rim only, from front face 30 to rear face 32, at a distance from body 12. The bores do not communicate with cavity 15. In this example, all the bores are identical and extend at a same distance from axis 18. Each bore has an axis which is parallel to axis 18. Accordingly, each bore has a front opening on face 30 and a rear opening on face 32.

When molding the tank, before front face 30 of the rim contacts parison 2, the air located between the rim and the parison escapes through the bores 336. Thus, no air is trapped and the welding of the component to the tank wall is preserved. This permits to avoid bad welds. When the component has its final position in the tank, the holes are closed by the tank wall.

With this orientation of the holes, when making the component by molding, the line of draw is situated in a plane which is perpendicular to axis 18. This permits an easy demolding of the component. This also permits to have an annular circumferential relief 31 protruding from face 30 if desired.

### Fourth embodiment

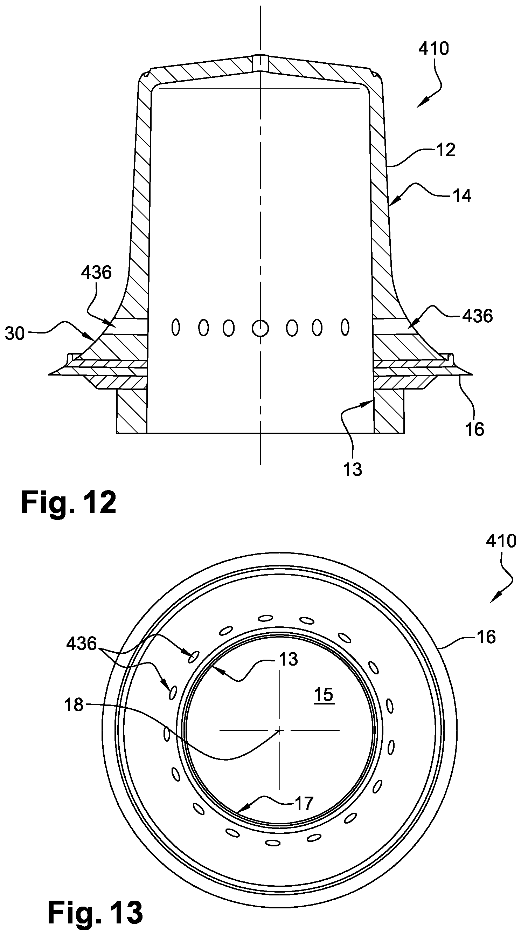

A fourth embodiment of the component of the invention is illustrated on figures 12 and 13.

This component 410 is identical to component 310 of the previous embodiment except for the form and orientation of the bores. Here, each bore 436 extends along a direction radial to axis 18. Thus the bores are not parallel to each others. All the bores are situated in a same general plane which is perpendicular to axis 18. Each bore has an external opening on face 30 and an internal opening on internal face 17 forming cavity 15. Thus each bore permits a flow communication between the exterior and the interior of the component.

When molding the tank, when front face 30 of the rim contacts parison 2, the air located between the rim and the parison escapes through the bores, towards cavity 15. Thus, no air is trapped and the welding of the component with the tank wall is preserved. This permits to avoid bad welds.

Again, when the component has its final position in the tank, the holes are closed by the tank wall.

Obviously, numerous modifications can be made without leaving the scope of the invention.

The shoulder may be discontinuous around body 12.

In another particular embodiment, the shoulder may comprise one or several tabs. The tab(s) may be positioned with an angle of inclination with respect to the main axis of the body 12.

## Claims

1. A component (110-410) for a vehicle plastic hollow article (2) comprising a wall obtained from a plastic parison, the component being intended to be welded to the wall and comprising:
- a main hollow body (12) having an external face (14), and
- a shoulder (16) protruding from the external face,
the component showing at least one recess (136-436) arranged for receiving air when the shoulder contacts the wall during the welding of the component,
**characterised in that**
the component comprises ribs (134; 234) defining the recess or at least one of the recesses between each other.

2. A component according to the preceding claim wherein the recess or at least one of the recesses (136; 236) has a closed bottom.

3. A component according to claim 1 wherein the ribs (134) are oriented along a radial direction with reference to a main axis of symmetry (18) of the component.

4. A component according to claim 1 wherein the ribs (234) are parallel to a same plane and parallel to a main axis of symmetry (18) of the component.

5. A component according to any of the preceding claims wherein the recess or at least one of the recesses (336; 436) has two distinct openings.

6. A component according to any of the preceding claims wherein the recess or at least one of the recesses (336) extends in the shoulder, preferably in the shoulder only.

7. A component according to any of the preceding claims wherein the recess or at least one of the recesses (436) extends in a wall of the body.

8. A component according to any of the preceding claims wherein the recess or at least one of the recesses (436) is in communication with a main internal cavity (15) of the body.

9. A component according to any of the preceding claims wherein the recess or at least one of the recesses (336) is arranged for not being in communication with a main internal cavity of the body.

10. A component according to any of the preceding claims wherein the recess or at least one of the recesses comprises a bore (336; 436).

11. A component according to claim 10 wherein the bore or at least one of the bores (336) is parallel to a main axis of symmetry (18) of the component.

12. A component according to any of claims 10 and 11 wherein the bore or at least one of the bores (436) is oriented along a radial direction with reference to a main axis of symmetry (18) of the component.

13. A vehicle plastic fuel tank (2), comprising a component (110-410) according to any of the preceding claims.

14. A process for making a vehicle plastic hollow article (2), comprising a step of molding a part (20) of the article with a component according to any of claims 1 to 12.

15. A process for making a vehicle plastic hollow article obtained by molding a parison (2), the process comprising the step of welding a component (110-410) to the parison, the component comprising a hollow body (12) and a shoulder (16) extending outwardly from the body and arranged for welding the body to the parison, the component having at least one recess (136-436) arranged for receiving air when the shoulder contacts the parison during the welding step,
**characterised in that** the component comprises ribs (134; 234) defining the recess or at least one of the recesses between each other.

## Patentansprüche

1. Bauteil (110-410) für einen Kunststoffhohlkörper (2) eines Fahrzeugs, der eine Wand aufweist, die aus einem Kunststoff-Vorformling erhalten wird, wobei das Bauteil dazu bestimmt ist, an die Wand geschweißt zu werden, und aufweist:
- einen Haupthohlkörper (12) mit einer Außenfläche (14) und
- einen Absatz (16), der von der Außenseite vorsteht, wobei das Bauteil mindestens eine Ausnehmung (136-436) aufweist, die zum Aufnehmen von Luft angeordnet ist, wenn der Absatz während des Schweißens des Bauteils die Wand berührt,
**dadurch gekennzeichnet, dass**
das Bauteil Rippen (134; 234) aufweist, die die Ausnehmung oder mindestens eine der Ausnehmungen zwischen sich bilden.

2. Bauteil nach dem vorhergehenden Anspruch, wobei die Ausnehmung oder mindestens eine der Ausnehmungen (36, 236) einen geschlossenen Boden aufweist.

3. Bauteil nach Anspruch 1, wobei die Rippen (134) in Bezug auf eine Hauptsymmetrieachse (18) des Bauteils entlang einer radialen Richtung ausgerichtet sind.

4. Bauteil nach Anspruch 1, wobei die Rippen (234) parallel zu einer gleichen Ebene und parallel zu einer Hauptsymmetrieachse (18) des Bauteils sind.

5. Bauteil nach einem der vorhergehenden Ansprüche, wobei die Ausnehmung oder mindestens eine der Ausnehmungen (336; 436) zwei getrennte Öffnungen aufweist.

6. Bauteil nach einem der vorhergehenden Ansprüche, wobei sich die Ausnehmung oder mindestens eine der Ausnehmungen (336) sich in dem Absatz, vorzugsweise nur in dem Absatz, erstreckt.

7. Bauteil nach einem der vorhergehenden Ansprüche, wobei sich die Ausnehmung oder mindestens eine der Ausnehmungen (436) in einer Wand des Körpers erstreckt.

8. Bauteil nach einem der vorhergehenden Ansprüche, wobei die Ausnehmung oder mindestens eine der Ausnehmungen (436) mit einem inneren Haupthohlraum (15) des Körpers in Verbindung steht.

9. Bauteil nach einem der vorhergehenden Ansprüche, wobei die Ausnehmung oder mindestens eine der Ausnehmungen (336) so angeordnet ist, dass sie nicht mit einem inneren Haupthohlraum des Körpers in Verbindung steht.

10. Bauteil nach einem der vorhergehenden Ansprüche, wobei die Ausnehmung oder mindestens eine der Ausnehmungen eine Bohrung (336; 436) aufweist.

11. Bauteil nach Anspruch 10, bei dem die Bohrung oder mindestens eine der Bohrungen (336) parallel zu einer Hauptsymmetrieachse (18) des Bauteils liegt.

12. Bauteil nach einem der Ansprüche 10 und 11, wobei die Bohrung oder mindestens eine der Bohrungen (436) in Bezug auf eine Hauptsymmetrieachse (18) des Bauteils entlang einer radialen Richtung ausgerichtet ist.

13. Kunststoff-Kraftstofftank (2) für ein Fahrzeug, aufweisend ein Bauteil (110-410) nach einem der vorhergehenden Ansprüche.

14. Verfahren zur Herstellung eines Kunststoffhohlkörpers (2) eines Fahrzeugs, umfassend einen Schritt des Formens eines Teils (20) des Körpers mit einem Bauteil nach einem der Ansprüche 1 bis 12.

15. Verfahren zur Herstellung eines Kunststoffhohlkörpers (2) eines Fahrzeugs, der durch Formen eines Vorformlings (2) erhalten wird, wobei der Prozess den Schritt des Schweißens eines Bauteils (110-410) an den Vorformling aufweist, wobei das Bauteil einen Hohlkörper (12) und einen Absatz (16) aufweist, der sich von dem Körper nach außen erstreckt und zum Verschweißen des Körpers mit dem Vorformling angeordnet ist, wobei das Bauteil mindestens eine Ausnehmung (136-436) aufweist, die zum Aufnehmen von Luft angeordnet ist, wenn der Absatz während des Schweißschritts den Vorformling berührt, **dadurch gekennzeichnet, dass** das Bauteil Rippen (134; 234) aufweist, die die Ausnehmungen oder mindestens eine der Ausnehmungen zwischen sich bilden.

## Revendications

1. Composant (110-410) pour un article creux (2) en matière plastique de véhicule comprenant une paroi obtenue à partir d'une paraison en matière plastique, le composant étant destiné à être soudé à la paroi, et comprenant :
- un corps creux principal (12) ayant une face externe (14), et
- un épaulement (16) faisant saillie depuis la face externe,
le composant présentant au moins un évidement (136-436) agencé pour recevoir de l'air lorsque l'épaulement vient en contact avec la paroi lors du soudage du composant,
**caractérisé en ce que** le composant comprend des nervures (134 ; 234) définissant entre elles l'évidement ou au moins un des évidements.

2. Composant selon la revendication précédente, dans lequel l'évidement ou au moins l'un des évidements (136 ; 236) a un fond fermé.

3. Composant selon la revendication 1, dans lequel les nervures (134) sont orientées selon une direction radiale par rapport à un axe de symétrie (18) principal du composant.

4. Composant selon la revendication 1, dans lequel les nervures (234) sont parallèles à un même plan et parallèles à un axe de symétrie (18) principal du composant.

5. Composant selon l'une quelconque des revendications précédentes, dans lequel l'évidement ou au moins l'un des évidements (336 ; 436) présente deux ouvertures distinctes.

6. Composant selon l'une quelconque des revendications précédentes, dans lequel l'évidement ou au moins l'un des évidements (336) s'étend dans l'épaulement, de préférence dans l'épaulement uniquement.

7. Composant selon l'une quelconque des revendications précédentes, dans lequel l'évidement ou au moins l'un des évidements (436) s'étend dans une paroi du corps.

8. Composant selon l'une quelconque des revendications précédentes, dans lequel l'évidement ou au moins l'un des évidements (436) est en communication avec une cavité interne principale (15) du corps.

9. Composant selon l'une quelconque des revendications précédentes, dans lequel l'évidement ou au moins l'un des évidements (336) est agencé de façon à ne pas être en communication avec une cavité interne principale du corps.

10. Composant selon l'une quelconque des revendications précédentes, dans lequel l'évidement ou au moins l'un des évidements comprend un alésage (336 ; 436).

11. Composant selon la revendication 10, dans lequel l'alésage ou au moins un des alésages (336) est parallèle à un axe de symétrie (18) principal du composant.

12. Composant selon l'une quelconque des revendications 10 et 11, dans lequel l'alésage ou au moins l'un des alésages (436) est orienté selon une direction radiale par rapport à un axe de symétrie (18) principal du composant.

13. Réservoir de carburant (2) en matière plastique pour véhicule, comprenant un composant (110-410) selon l'une quelconque des revendications précédentes.

14. Procédé de fabrication d'un article creux (2) en matière plastique pour véhicule, comprenant une étape de moulage d'une partie (20) de l'article avec un composant selon l'une quelconque des revendications 1 à 12.

15. Procédé de fabrication d'un article creux en matière plastique de véhicule obtenu par moulage d'une paraison (2), le procédé comprenant l'étape de soudage d'un composant (110-410) à la paraison, le composant comprenant un corps creux (12) et un épaulement (16) s'étendant vers l'extérieur depuis le corps et agencé pour souder le corps à la paraison, le composant ayant au moins un évidement (136-436) agencé pour recevoir de l'air lorsque l'épaulement vient en contact avec la paraison pendant l'étape de soudage, **caractérisé en ce que** le composant comprend des nervures (134, 234) définissant entre elles l'évidement ou au moins un des évidements.
